# EUROPÄISCHE PATENTSCHRIFT

(11) **EP 2 727 116 B1**
(45) Veröffentlichungstag und Bekanntmachung des Hinweises auf die Patenterteilung: **29.06.2016**
(21) Anmeldenummer: 12772126.4
(22) Anmeldetag: 02.07.2012
(51) Int. Cl.: G21C 11/02, G21C 13/024, G21C 21/00

(54) **VERFAHREN ZUM BAU EINER SICHEREN KERNREAKTORANLAGE UND ENTSPRECHENDE KERNREAKTORANLAGE**
METHOD FOR THE CONSTRUCTION OF A SECURE NUCLEAR REACTOR PLANT, AND CORRESPONDING REACTOR PLANT
PROCÉDÉ DE CONSTRUCTION D'UNE INSTALLATION DE RÉACTEUR NUCLÉAIRE SÛRE ET INSTALLATION DE RÉACTEUR CORRESPONDANTE

(30) Priorität: 02.07.2011 CH 11142011
(43) Veröffentlichungstag der Anmeldung: 07.05.2014
(73) Patentinhaber: Rump, Björn S., 1253 Vandoeuvres (CH)
(72) Erfinder: Rump, Björn S., 1253 Vandoeuvres (CH)
(74) Vertreter: Nuss, Laurent
(86) Internationale Anmeldenummer: PCT/IB2012/001719
(87) Internationale Veröffentlichungsnummer: WO 2013/005111

(56) Entgegenhaltungen:
- DE-B- 1 046 790
- GB-A- 899 851
- JP-A- 5 039 620
- SE-L- 7 508 757
- US-A- 5 223 208

## Beschreibung

Die vorliegende Erfindung betrifft ein Verfahren zum Bau einer sicheren Kernreaktoranlage, sowie eine entsprechende Anlage.

Enorm viel ist erfunden worden, um die Sicherheit von Kernreaktoren zu erhöhen.

Die bekannten Unfälle waren durch die Ausbreitung von radioaktiven Spaltprodukten mit längerer Halbwertszeit speziell langzeitlich äusserst schädlich. Aber erst der zweite schwere Unfall von Kernreaktoren in Fukushima bewies, dass die heutigen Sicherheitsmassnahmen für Kernreaktoren in der Tat nicht genügend Sicherheit bieten.

Es besteht somit ein dringendes Verlangen, bei solchen Unfällen, die Ausbreitung radioaktiver Spaltprodukte auf ein Minimum, wenn nicht gänzlich, auszuschalten.

Zudem ist bei den heutigen Kernkraftreaktoren auch deren Aussetzen und Verletzbarkeit gegenüber feindlichen Zerstörhandlungen problematisch, sei es durch Flieger oder Raketen, oder noch durch terroristische Angriffe.

Der folgenden Erfindung liegt die Aufgabe zu Grunde, die so erwähnten Mängel zu überwinden, soweit wie möglich unter minimalem Aufwand.

Diese Aufgabe wird erfindungsgemäss gelöst durch ein Verfahren zum Bau einer Kernreaktoranlage gemäß Anspruch 1.

Die Erfindung betrifft auch eine Kernreaktoranlage gemäß Anspruch 7.

Das erfindungsgemässe Bauverfahren kann auch noch weitere technische Massnahmen oder Schritte beinhalten, welche insbesondere dadurch gekennzeichnet sind, dass:
- vor Auffüllen des Zwischenraums mit Beton, die Kavernenwände auf Gase und Flüssigkeiten hin abgedichtet werden;
- vor dem Auffüllen des Zwischenraums mit Beton, ausserhalb des Schutzmantels, insbesondere direkt auf dessen äusserer Oberfläche und vorzugsweise durch entsprechende Stahlumhüllungen begrenzte, Hohlräume eingerichtet werden;
- vor dem Auffüllen des Zwischenraums mit Beton, Verbindungsrohre eingerichtet werden, welche die Hohlräume untereinander und/oder mit der Aussenwelt über den Tunnel verbinden;
- vor dem Auffüllen des Zwischenraums mit Beton, die Dichtigkeit des Schutzmantels durch Anwenden eines internen Überdrucks über eine gewisse Zeitdauer überprüft wird;
- der oder die Kühlturm(ürme) ebenfalls im Felsgestein eingebaut werden.

Im Übringen ist dem Fachmann bekannt, die weiteren Auslegungen und Ausstattungen der Anlage so zu planen und einzurichten, wie es der spätere Reaktorbetrieb erfordert.

DE 10 46 790 zeigt einen Druckbehälter eines Kernreaktors, der sich in einem in einen Berg gesprengten Raum befindet, der mit der Außenwelt über einen vertikalen Schacht in Verbindung steht. Der Raum zwischen Druckbehälter und Bergwand ist mit Beton gefüllt.

GB 899 851 schlägt für eine ähnliche Anordnung vor, die Oberfläche des Gesteins durch Zement- / Kunststoffinjektionen abzudichten.

Durch Konstruktion von Reaktoren im Untergrund oder in Felskavernen kann somit der Ausbruch nach einem GAU (grösster anzunehmender Unfall) fast ganz eliminiert werden.

Ein GAU kann durch äussere oder innere Unfälle ausgelöst werden. Die Gefahr durch äussere Angriffe wird mit der Erfindung fast total vermieden. Erstens ist eine unterirdische Anlage viel schwieriger durch feindliche Flieger oder Raketen zu lokalisieren. Zweitens braucht es enorm viel mehr Energie, durch einen natürlichen, mehrere Meter dicken Schutzschild aus Fels und/oder Sedimentschichten so zu durchdringen, dass der eigentliche Schutzmantel aus Beton und/oder Stahl leck wird und im schlimmsten Fall zum Austritt von radioaktivem Material führt.

Von internen, terroristischen Angriffen ist ein erfindungsgemäss konzipierter Reaktor auch extrem viel schwieriger anzugreifen. Ein einziger unterirdischer Zugang ist sehr effizient kontrollierbar. Sogar wenn Terroristen den Reaktor zum GAU triggern (Tschernobyl), ist bei korrekter Auslegung des natürlichen Schutzschildes ein Ausbruch von radioaktivem Material ausgeschlossen.

In der folgenden Beschreibung wird nun die Erfindung an Hand eines Ausführungsbeispiels näher erläutert, dies im Zusammenhang mit der anliegenden schematischen Figur, welche eine Querschnittsicht durch eine Kernreaktoranlage gemäss der Erfindung darstellt.

Die abgebildete Kernreaktoranlage ist mit einem gegenüber Flüssigkeiten und Gasen abgedichtenden Containmentraum, 1 versehen, welcher von einer mehrschichtigen Schutzhülle 5, 6' umgeben ist.

Diese Reaktoranlagekonstruktion weist insbesondere folgende Merkmale auf:
die Schutzhülle 5, 6' ist in einer natürlichen oder künstlich angefertigten Kaverne 2 angeordnet, welche sich in einem felsigen Untergrund oder Gebirge 3 befindet und über einen Tunnel oder einen Schacht 4 als einziger Zugang mit der Aussenwelt in Verbindung steht,
die Schutzhülle beinhaltet innenseitig einen abdichtend geschlossenen Schutzmantel 5 aus Stahl,
zwischen dem Schutzmantel 5 und den Kavernenwänden 2' ist ein umhüllender Zwischenraum 6 vorhanden, welcher mit Beton oder Zement 6' ausgefüllt ist, mit Ausnahme des Tunnels oder Schachts 4, welcher vorzugsweise horizontal oder schwach nach aussen ansteigend ausgelegt ist.

Nach Ausfindung oder Ausgrabung der Kaverne 2 und deren Gestaltung (Dicke der Felswand, Grösse, Form, Zugang, ...) zwecks Anwendung der Erfindung wird in der fertiggestellte Kaverne 2 der Schutzmantel aus Stahl 5 aufgebaut. Zwischen diesem und der Kavernenwand 2' ist ein Volumen 3 vorgesehen, welcher nach Fertigstellung des Schutzmantels 5 mit Beton 6' aufgefüllt wird. Der Mindestabstand zwischen dem Stahlmantel und der Kavernenwand wird so berechnet, dass der bei einem Kernunfall im Stahlmantel 5 auftretende Gasdruckanstieg effizient auf das Gestein der Kaverne 2 übertragen wird. Der Stahlmantel wird weiter so berechnet, dass er vor allem auftretenden Gasen und Flüssigkeiten (Wasser) mit Spaltprodukten belastet, das Eindringen in den Fels der Kaverne 2 verunmöglicht.

Vor dem Einbringen des Betons 6' (Betontyp angepasst zur Konstruktion von Kuppeln von Atomkraftwerken) ist es vorteilhaft in von den Sicherheitsvorschriften verlangten Abständen ausserhalb des Stahlmantels Hohlräume 8 in Stahlumhüllungen anzubringen, welche mit den nötigen Messgeräten und Sonden bestückt sind. Verbindungsrohre 9 zwischen den Hohlräumen 8 werden schon vor dem Ausgiessen des Betons mit den nötigen Messkabeln bestückt und verbunden. Diese Vorkehrungen erlauben eine zusätzliche Überwachung (es ist natürlich eine interne Überwachung des Reaktors vorhanden) auch bei Normalbetrieb. Bei einem Unfall kann so die Kondition, speziell die Dichtigkeit, des Schutzmantels 5 geprüft werden und über weitere Massnahmen zur Verhinderung vom Austreten von gefährlichen Stoffen entschieden werden.

Je nach der mechanischen Festigkeit und Dichtigkeit des Kavernengesteines 3 ist es vorteilhaft, vor dem Ausgiessen mit Beton 6' die Kavernenwände 2' auf eine vom Tunnelbau bekannte Weise vollständig abzudichten. Bei nicht sehr dichtem Felsmaterial kann es nützlich sein, an den Kavernenwänden 2' Rohrsysteme 7 anzubringen, durch welche nach dem totalen Auffüllen des umhüllenden Zwischenraums mit Beton es möglich ist, vom Fachmann bekannte Dichtungsmittel zu injizieren, um eventuell verbleibende Undichtigkeiten des Felsenmaterials möglichst vollständig zu kolmatieren.

Weiterhin kann es von Vorteil sein, um die Dichtigkeit des Schutzmantels 5 zu sichern, diesen vor dem Einfüllen des Betons oder Zementes 6' zu prüfen, in dem man (nachdem der in der Verlängerung des Stollens 4 liegende Eingang hermetisch abgedichtet ist - z. B. durch eine gepanzerte Stahltür 5') in der Umhüllung 5 einen Überdruck erzeugt, und den so erzeugten Druck über mindestens eine Stunde misst. Dem Fachmann sind die Details einer solchen Prüfung wohl bekannt. Der zeitliche Verlauf des gemessenen Überdruckes kann die Dichtigkeit des Schutzmantels 5 belegen.

Das beschriebene Abdichtungs- und Einrichtungsverfahren kann im Sinne der Ansprüche auch zur sicheren Lagerung von abgebrannten Brennstäben, Atommüll (Spaltprodukte) dienen. Die langfristige und sichere Lagerung dieser Produkte ist sehr umstritten. Speziell ist das Einsickern von Spaltprodukten aus leckgewordenen Containern in das Grundwasser hinterfragt. Durch Anwendung der erfindungsgemässen Lehre kann auch dieses Sicherheitsproblem wesentlich und langfristig verringert werden.

Insbesondere kann eine Anlage nach der Erfindung, nach ihrer aktiven energieproduzierenden Lebensphase, in einen sicheren Lagerungsort für solche Produkte umgewandelt werden.

Um das Kernkraftwerk als Ganzes vor terroristischen Angriffen zu sichern, in dem man es aus dem Luftraum schwer sichtbar gestaltet, kann der Kühlturm (nicht dargestellt) ebenfalls im Felsgestein eingebaut werden. Dies verringert auch den negativen Einfluss der Kühlwolke, da eine solche Anlage auch in einer Gegend mit wenig Agrikulturwirtschaft gebaut werden kann. Verglichen mit bekannten Anlagen im Bergbausektor ist der Aufwand für eine solche Disposition ökonomisch vertretbar.

Nach einem Unfall ist es wichtig dafür zu sorgen, dass die Restwärme (ca. 4-8 % der Reaktorgesamtleistung) des Reaktors abgeführt werden kann. Dem Fachmann im Reaktorbau sind Mittel bekannt, wie die Restwärme auch bei Ausfall der Hauptkühlkreise durch ein zusätzliches Kühlsystem gesichert werden kann.

Die nach 8, 9 ausgelegten Volumen und Leitungen können mit Thermoelementen und Strahlungsmessgeräten bestückt werden. Diese dienen dazu, die im Normalbetrieb auftretenden Wärmemengen und Strahlungsdosen zu messen. Diese Aufzeichnungen können auch dazu dienen, eine Abnormalität des Reaktorbetriebes fest zu stellen und die nötigen Abschaltungen auszulösen. Nach einem Unfall dienen diese Resultate auch dazu die Wirksamkeit der sekundär Kühlung zu messen und zu steuern.

Es ist effizient dem Sekundärkreislauf während und nach einem Unfall Bohrsalze beizufügen, um dadurch noch freien Neutronenflüsse zusätzlich zu dämmen und damit wiederum die gefährliche Restwärme zu reduzieren. Bei einem Unfall soll daher von einem mit Borwasser gefüllten Behälter dem Sekundärkreislauf solche Flüssigkeit beigemischt werden.

Die Injizierung des Dichtungsmittels in den Zwischenraum 6 kann je nach der Struktur der Felsenstruktur 3 selektiv durch die Leitungen 7 erfolgen, um eine möglichst gleichförmige Ausfüllung des Zwischenraumes 6 und Abdichtung der Wände 2 zu gewährleisten. Dem Fachmann solcher Injektionen sind die nötigen Steuerungs- und Kontrollmethoden bestens bekannt (insbesondere können entsprechende Dichtungsmittel der Firma Sika benutzt werden, welche schon im Tunnelbau oder im Bergwerkbau Anwendung finden).

Durch die Auslegung von Kernreaktoren in unterirdischen Kavernen 2 werden die Risiken des Betriebes und des Austrittes von radioaktiven Spaltprodukten bei internen Unfällen, äusserlichen Angriffen und Naturkatastrophen wesentlich verringert.

Hierunter sind weitere schützende Massnamen, die gegebenenfalls angewendet werden können:
- die Bevölkerung der Umgebung soll ausführlich über den Charakter der Kernenergie informiert werden;
- die betroffene Bevölkerung, Gemeinde, soll an dem Ertrag des Kraftwerkes vernünftig beteiligt werden;
- die gesamte Anlage soll so ausgelegt werden, dass diese nicht schon von Weitem als solche erkannt wird;
- Abwärme: diese soll so weit als möglich weiter verwendet werden. Fernheizung, Gemüse-Anbau, Anlagen in kalten Klimazonen können diese Energiequelle besonders vorteilhaft verwenden;
- Kühltürme sollen möglichst unauffällig (getarnt, z. B. an einen Berg anlehnend gebaut werden. Eine redundant Auslegung der Kühlungsanlage soll so ausgelegt werden, dass bei einem Scram die Abführung der restlichen Abwärme gesichert ist.

Soll trotz allen Vorsichtsmassnahmen ein GAU eintreten, soll es möglich sein, den Reaktor Eingang und Zugang zu verriegeln, um den Reaktor ohne menschliche Einwirkung auskühlen zu lassen.

Der Zugangsstollen (Tunnel 4) soll so ausgelegt werden, dass er im Notfall rasch verriegelt, bzw. auch verschüttet werden kann.

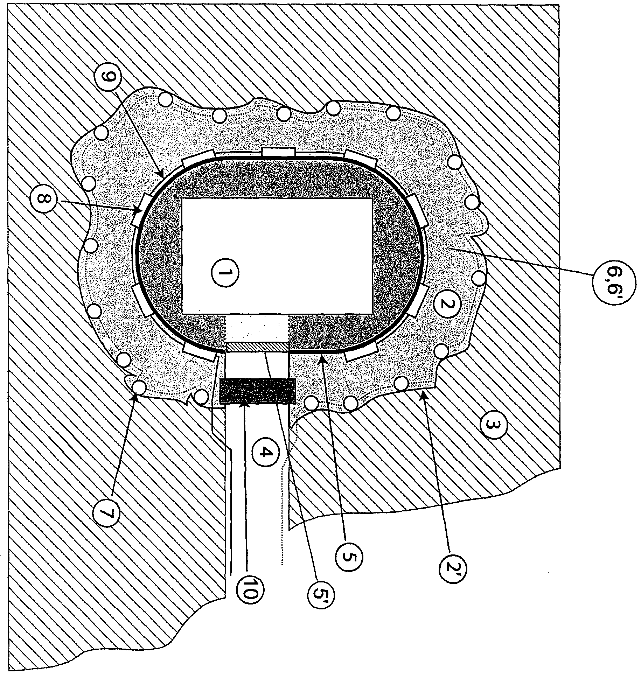

Wie dies aus der Figur hervorgeht, umgehen die Verbindungsrohre 9, sowie die Versorgungsleitungen des Rohrsystems 7 die Verschliessungstür 10 des Zugangsstollens 4.

Gegebenenfalls kann in diesem Zugangstollen 4 auch noch mindestens eine weitere, äussere Tür vorgesehen werden (nicht dargestellt), und somit wenigstens eine Schleuse entstehen (womöglich mit Dekontaminierungsmitteln ausgestattet).

Die folgenden Gegenstände, Komponenten und Bestandteile der Erfindung sind auf der anliegenden Figur sichtbar:
1) Containmentraum (mit Reaktor)
2) Kaverne
2') Kavernewände
3) felsiger Untergrund/Gebirge
4) Tunnel / Schacht / Zugangsstollen
5) Stahl - Schutzmantel
5') Tür des Schutzmantels
6) Zwischenvolumen / Raum
6') Beton / Betonhülle
7) Rohrsystem (für die Abdichtung)
8) Hohlräume
9) Verbindungsrohre (für die Mess- und Verbindungsleitungen)
10) Tür / Schild im Tunnel / Stollen

Selbstverständlich ist die Erfindung nicht auf die beschriebenen und dargestellten Ausführungsformen begrenzt. Änderungen, z. B. in den Ausführungsformen der verschiedenen Bestandteile sind, soweit sie im Rahmen des beanspruchten Schutzbegehrens bleiben, jederzeit möglich.

## Patentansprüche

1. Verfahren zum Bau einer Kernreaktoranlage, umfassend einen durch eine Schutzhülle umgebenen Containmentraum, wobei das Verfahren folgende Bauschritte beinhaltet:
Ausfindung bzw. Anfertigung einer Kaverne (2) in einem felsigen Untergrund oder Gebirge (3), welche mit der Aussenwelt über einen Tunnel, einen Schacht oder einen Stollen (4) verbunden ist,
Aufbau oder Einbringen eines abdichtend geschlossenen Schutzmantels (5) aus Stahl, welcher den Containmentraum (1) begrenzt, mit Bildung eines umhüllenden Zwischenraumvolumens (6) zwischen dem Schutzmantel (5) und den Kavernenwänden (2'), 13 und
Auffüllen des Zwischenraums (6) mit Beton oder Zement (6'), mit Ausnahme des Tunnels oder Schachts (4), und gegebenenfalls weiterer Hohlräume (8),
Verfahren **dadurch gekennzeichnet, dass** nach dem Auffüllen des Zwischenraums (6) mit Beton (6') eine zusätzliche Abdichtung bzg. Gasen und Flüssigkeiten des Felsenmaterials der Kavernenwände (2') vorgenommen wird, welche zusätzliche Abdichtung durch Einspritzen eines flüssigen Dichtungsmittels über ein an den Kavernenwänden angebrachtes und verteiltes Rohrsystem (7) ausgeführt wird.

2. Verfahren nach Anspruch 1, **dadurch gekennzeichnet, dass** vor Auffüllen des Zwischenraums (6) mit Beton (6') die Kavernenwände (2') auf Gase und Flüssigkeiten hin abgedichtet werden.

3. Verfahren nach einem der Ansprüche 1 und 2, **dadurch gekennzeichnet, dass** vor dem Auffüllen des Zwischenraums (6) mit Beton (6') ausserhalb des Schutzmantels (5), insbesondere direkt auf dessen äusseren Oberfläche und vorzugsweise durch entsprechende Stahlumhüllungen begrenzte, Hohlräume (8) eingerichtet werden.

4. Verfahren nach einem der Ansprüche 1 bis 3, **dadurch gekennzeichnet, dass** vor dem Auffüllen des Zwischenraums (6) mit Beton (6') Verbindungsrohre (9) eingerichtet werden, welche den Zwischenraum (6) durchqueren, vorzugsweise sich von den Hohlräumen (8) bis zu den Kavernenwänden (2') erstrecken und gegebenenfalls diese Hohlräume (8) miteinander und/oder mit der Aussenwelt über den Tunnel (4) verbinden.

5. Verfahren nach einem der Ansprüche 1 bis 4, **dadurch gekennzeichnet, dass** vor dem Auffüllen des Zwischenraums (6) mit Beton (6') die Dichtigkeit des Schutzmantels (5) durch Anwenden eines internen Überdrucks über eine gewisse Zeitdauer überprüft wird.

6. Verfahren nach einem der Ansprüche 1 bis 5, **dadurch gekennzeichnet, dass** mindestens ein Kühlturm ebenfalls im Felsgestein eingebaut wird.

7. Kernreaktoranlage mit einem gegenüber Flüssigkeiten und Gasen abgedichtenden Containmentraum, welcher von einer Schutzhülle umgeben ist,
wobei die Schutzhülle (5, 6') in einer natürlichen oder künstlich angefertigten Kaverne (2) angeordnet ist, welche sich in einem felsigen Untergrund oder Gebirge (3) befindet und über einen vorzugsweise horizontal oder schwach geneigt ausgelegten Tunnel oder Schacht (4) als einzigem Zugang mit der Aussenwelt in Verbindung steht,
wobei die Schutzhülle innenseitig einen abdichtend geschlossenen Schutzmantel (5) aus Stahl beinhaltet,
wobei zwischen dem Schutzmantel (5) und den Kavernenwänden (2') ein umhüllender Zwischenraum (6) vorhanden ist, welcher mit Beton oder Zement (6') ausgefüllt ist, mit Ausnahme des Tunnels oder Schachts (4') und etwaiger Hohlräume (8),
Kernreaktoranlage (1) **dadurch gekennzeichnet, dass** in den Poren, Lücken und/oder Spalten des Felsenmaterials der Kavernenwände (2') mindestens ein zweckmässiges Dichtungsmittel bezüglich Abdichtung gegenüber Gasen und Flüssigkeiten vorhanden ist, gegebenenfalls auch an den Schnittstellen zwischen der Betonhülle (6') und den Kavernenwänden (2'), und dass an den Kavernenwänden (2') ein regelmässig verteiltes Rohrsystem (7) zum Einspritzen des mindestens einen vorgenannten Dichtungsmittels in flüssiger Form vorhanden ist.

8. Kernreaktoranlage nach Anspruch 7, **dadurch gekennzeichnet, dass** auf der äusseren Oberfläche des Schutzmantels (5) Hohlräume (8) vorhanden sind, welche vorzugsweise durch Stahlumhüllungen begrenzt sind und insbesondere Detektoren und Messsonden beinhalten.

9. Kernreaktoranlage nach einem der Ansprüche 7 und 8, **dadurch gekennzeichnet, dass** in der Betonhülle (6') des Zwischenraums (6) Verbindungsrohre (9) eingebettet sind, welche diesen Zwischenraum (6) durchqueren, vorzugsweise sich von den Hohlräumen (8) bis zu den Kavernenwänden (2') erstrecken und gegebenenfalls diese Hohlräume (8) miteinander und/oder mit der Aussenwelt, vorzugsweise über den Tunnel (4) verbinden.

10. Kernreaktoranlage nach einem der Ansprüche 7 bis 9, **dadurch gekennzeichnet, dass** zumindest ein Kühlturm, welcher mit dem Schutzmantel (5) in Fluidkommunikation ist, im Felsgestein eingebaut ist.

## Claims

1. Method for the construction of a nuclear power plant, comprising a containment space surrounded by a protective shell, wherein the method comprises the following construction steps:
identifying or building a cavern (2) in rocky ground or in a mountain (3), said cavern (2) being connected to the outer environment via a tunnel, a shaft or passage (4),
erecting or introducing a sealed protective steel cover (5) delimiting the containment space (1) so as to form an encasing intermediate cavity (6) between the protective cover (5) and the cavern walls (2') and
filling the cavity (6) with concrete or cement (6') except for the tunnel or shaft (4) and possibly additional cavities (8),
the method being **characterised in that** after filling the intermediate cavity (6) with concrete (6') the rock material of the cavern walls (2') is sealed additionally from gases and liquids, the additional sealing being performed by injecting a liquid sealant via a pipe system (7) attached to and distributed on the cavern walls.

2. Method according to claim 1, **characterised in that** prior to filling the intermediate cavity (6) with concrete (6'), the cavern walls (2') are sealed against gases and liquids.

3. Method according to any one of claims 1 and 2, **characterised in that** prior to filling the intermediate cavity (6) with concrete (6'), cavities (8) are formed outside the protective cover (5), in particular directly on its outer surface and preferably delimited by suitable steel casings.

4. Method according to any one of claims 1 to 3, **characterised in that** prior to filling the intermediate cavity (6) with concrete (6'), connecting pipes (9) are installed which cross the intermediate cavity (6), preferably extend from the cavities (8) to the cavern walls (2') and if necessary connect said cavities (8) to one another and/or to the outer environment via the tunnel (4).

5. Method according to any one of claims 1 to 4, **characterised in that** prior to filling the intermediate cavity (6) with concrete (6'), the seal of the protective cover (5) is tested by using an internal overpressure for a specific time period.

6. Method according to any one of claims 1 to 5, **characterised in that** at least one cooling tower is also built into the rock.

7. Nuclear power plant with a containment space sealed against liquids and gases, which is surrounded by a protective shell,
wherein the protective shell (5, 6') is arranged in a natural or artificially made cavern (2), which is located in rocky ground or in a mountain (3) and is connected to the external environment via a tunnel or a shaft (4), which is preferably horizontal or slightly inclined, as the sole access,
wherein the protective shell contains on the inside a sealed protective cover (5) made of steel,
wherein between the protective cover (5) and the cavern walls (2') an encasing intermediate cavity (6) is provided which is filled with concrete or cement (6'), with the exception of the tunnel or shaft (4) and any cavities (8),
the nuclear power plant being **characterised in that** at least one suitable sealant is provided in the pores, gaps and/or splits in the rock material of the cavern walls (2') for sealing against gases and liquids, if necessary also on the interfaces between the concrete casing (6') and the cavern walls (2') and **in that** on the cavern walls (2') a regularly distributed pipe system (7) is provided for injecting the at least one aforementioned sealant in liquid form.

8. Nuclear power plant according to claim 7, **characterised in that** on the outer surface of the protective cover (5) cavities (8) are provided which are preferably delimited by steel casings and in particular contain detectors and measuring probes.

9. Nuclear power plant according to any one of claims 7 and 8, **characterised in that** in the concrete casing (6') of the intermediate cavity (6) connecting pipes (9) are embedded which transverse said intermediate cavity (6), preferably extend from the cavities (8) to the cavern walls (2') and if necessary connect said cavities (8) to one another and/or to the external environment, preferably via the tunnel (4).

10. Nuclear power plant according to any one of claims 7 to 9, **characterised in that** at least one cooling tower, which is in fluid communication with the protective cover (5), is built into the rock.

## Revendications

1. Procédé de construction d'une centrale nucléaire dotée d'une chambre de confinement entourée par une enceinte de protection, ledit procédé incluant les étapes de construction suivantes :
découverte exploratoire ou création, dans un sous-sol rocheux ou dans une montagne (3), d'une caverne (2) reliée au monde extérieur par l'intermédiaire d'un tunnel, d'un puits ou d'une galerie (4),
érection ou intégration d'une enveloppe protectrice (5) en acier, fermée avec effet d'étanchement et délimitant ladite chambre de confinement (1), avec formation d'un volume d'espace interstitiel circonférentiel (6) entre ladite enveloppe protectrice (5) et les parois (2') de ladite caverne, et
comblement dudit espace interstitiel (6) par du béton ou du ciment (6'), à l'exception dudit tunnel ou dudit puits (4), et d'autres cavités (8) le cas échéant,
procédé **caractérisé par le fait qu'**à l'issue du comblement de l'espace interstitiel (6) par du béton (6'), l'on effectue un étanchement supplémentaire du matériau rocheux des parois (2') de la caverne vis-à-vis de gaz et de liquides, lequel étanchement supplémentaire est opéré par injection d'un moyen d'étanchement liquide par l'intermédiaire d'un système de tubulures (7) réparti, implanté sur lesdites parois de la caverne.

2. Procédé selon la revendication 1, **caractérisé par le fait que** l'étanchéité des parois (2') de la caverne, vis-à-vis de gaz et de liquides, est instaurée préalablement au comblement de l'espace interstitiel (6) par du béton (6').

3. Procédé selon l'une des revendications 1 et 2, **caractérisé par le fait que**, préalablement au comblement de l'espace interstitiel (6) par du béton (6'), des cavités (8), de préférence délimitées par des gainages correspondants en acier, sont ménagées à l'extérieur de l'enveloppe protectrice (5), en particulier directement sur la surface extérieure de cette dernière.

4. Procédé selon l'une des revendications 1 à 3, **caractérisé par le fait que** des tubulures de jonction (9) traversant l'espace interstitiel (6), qui s'étendent de préférence jusqu'aux parois (2') de la caverne à partir des cavités (8) et relient éventuellement ces cavités (8) les unes aux autres et/ou au monde extérieur, par l'intermédiaire du tunnel (4), sont installées préalablement au comblement dudit espace interstitiel (6) par du béton (6').

5. Procédé selon l'une des revendications 1 à 4, **caractérisé par le fait que**, préalablement au comblement de l'espace interstitiel (6) par du béton (6'), l'étanchéité de l'enveloppe protectrice (5) est vérifiée, durant une certaine période, par application d'une surpression interne.

6. Procédé selon l'une des revendications 1 à 5, **caractérisé par le fait qu'**au moins une tour de refroidissement est pareillement intégrée dans la roche.

7. Centrale nucléaire comportant une chambre de confinement entourée par une enceinte de protection et rendue étanche vis-à-vis de liquides et de gaz,
ladite enceinte de protection (5', 6') étant logée dans une caverne (2) naturelle ou créée artificiellement, qui est située dans un sous-sol rocheux ou dans une montagne (3) et est en liaison avec le monde extérieur par l'intermédiaire d'un tunnel ou d'un puits (4) agencé, de préférence, horizontalement ou avec faible inclinaison, en tant qu'unique accès,
sachant que ladite enceinte de protection est intérieurement dotée d'une enveloppe protectrice (5) en acier, fermée avec effet d'étanchement,
un espace interstitiel circonférentiel (6), présent entre ladite enveloppe protectrice (5) et les parois (2') de ladite caverne, étant comblé par du béton ou du ciment (6') à l'exception dudit tunnel ou dudit puits (4), et d'éventuelles cavités (8),
ladite centrale nucléaire étant **caractérisée par le fait qu'**au moins un moyen d'étanchement, adéquat pour assurer l'étanchéité vis-à-vis de gaz et de liquides, est présent dans les pores, les discontinuités et/ou les fissures du matériau rocheux des parois (2') de la caverne, éventuellement aussi dans les zones d'interface entre l'enrobage de béton (6') et lesdites parois (2') de la caverne ; et **par le fait qu'**un système de tubulures (7) uniformément réparti, dévolu à l'injection sous forme liquide dudit moyen d'étanchement à présence minimale, se trouve sur lesdites parois (2') de la caverne.

8. Centrale nucléaire selon la revendication 7, **caractérisée par** la présence, sur la surface extérieure de l'enveloppe protectrice (5), de cavités (8) qui sont délimitées de préférence par des gainages en acier et renferment, en particulier, des détecteurs et des sondes de mesure.

9. Centrale nucléaire selon l'une des revendications 7 et 8, **caractérisée par le fait que** des tubulures de jonction (9), noyées dans l'enrobage de béton (6') de l'espace interstitiel (6) et traversant cet espace interstitiel (6), s'étendent de préférence jusqu'aux parois (2') de la caverne à partir des cavités (8) et relient éventuellement ces cavités (8) les unes aux autres et/ou au monde extérieur, de préférence par l'intermédiaire du tunnel (4).

10. Centrale nucléaire selon l'une des revendications 7 à 9, **caractérisée par le fait qu'**au moins une tour de refroidissement, en communication par fluide avec l'enveloppe protectrice (5), est intégrée dans la roche.
